Europäisches Patentamt

European Patent Office

Office européen des brevets

(19)

(11) Publication number: 0 380 028
A2

(12) EUROPEAN PATENT APPLICATION

(21) Application number: 90101223.7

(22) Date of filing: 22.01.90

(51) Int. Cl.5: C08J 5/18, B29C 41/38, B29K 69/00

(30) Priority: 23.01.89 US 299209

(43) Date of publication of application:
01.08.90 Bulletin 90/31

(84) Designated Contracting States:
DE FR GB

(71) Applicant: EASTMAN KODAK COMPANY
343 State Street
Rochester, New York 14650(US)

(72) Inventor: Machell, Julie Stein, c/o EASTMAN
KODAK COMPANY
Patent Department, 343 State Street
Rochester, New York 14650(US)
Inventor: Greener, Jehuda, c/o EASTMAN
KODAK COMPANY
Patent Department, 343 State Street
Rochester, New York 14650(US)

(74) Representative: Brandes, Jürgen, Dr. et al
Wuesthoff & Wuesthoff Patent- und
Rechtsanwälte Schweigerstrasse 2
D-8000 München 90(DE)

(54) Process for the production of low birefringent polymer films.

(57) There is described a process for making a low birefringent polymer film comprising the steps of casting a polymer solution on a surface and removing the dried film from the surface. The improvement is that the surface onto which the polymer solution is cast has a low surface energy. In preferred embodiments, the surface energy of the surface is less than about 35 dynes/cm.

FIG. I

SUBSTRATE / SURFACE ENERGY (dyne/cm)
□ QUARTZ 69.3
○ GLASS 49.4
■ ALUMINUM 49.0
△ PE 33.9
● TEFLON 20.4

## PROCESS FOR THE PRODUCTION OF LOW BIREFRINGENT POLYMER FILMS

The present invention is directed to a process for making low birefringent polymer films. The films are self supporting and are thus useful in optical devices such as supports for optical recording elements and cover sheets.

Polymeric materials are used in many important optoelectronic devices such as waveguides, optical fibers, optical storage elements and similar devices. The ability to control the optical properties of the materials in these devices is important.

One of the important properties of the polymeric component is the birefringence. Birefringence is defined as the difference in refractive index between two orthogonal planes of polarization and it expresses the level of of optical anisotropy of the material. In many optical devices it is important that the materials be optically isotropic, i.e., display low birefringence.

An optical storage element is a typical device where polymeric materials might be useful. The polymeric material might be used as a substrate for the optical element or it might be used as the cover sheet or protective layer to protect the recording layer. In many cases therefore, it is necessary to focus the recording or read out lasers through the polymeric material. If the material has high birefringence, the laser often cannot be focused precisely.

One solution to this problem is to use polymer blends. In United States Patent 4,373,065, for example, it is disclosed to use a blend of two polymers having opposite intrinsic anisotropies. When such a blend is processed, the resulting polymeric material is optically isotropic. However, finding a blend where the polymers are completely miscible is a difficult problem.

As is noted in the '065 patent cited above, very few materials that have been proposed for optical devices are optically isotropic as prepared. Often optical isotropy is introduced in the method that is used to make self supporting films from polymer solutions.

Two solutions to this problem are described in United States Patent 4,614,634. In that reference, the support is first prepared in a conventional manner. For example, in example 1 of the reference, a bisphenol A polycarbonate film is produced by casting on a polished, presumably metal surface. The birefringence is reduced in these films by either dipping the film in a solvent bath or by a heat treatment.

Neither of these treatments are entirely satisfactory. Dipping in a solvent requires the use of additional solvents, in addition to the solvents that are used in forming the initial solution, which is undesirable from an environmental perspective. In addition, the dipping step is difficult to control and is prone to physical defects. The heat treatment process is also not satisfactory. It requires that the film be placed in a frame so as to avoid any stress during heat treatment. This additional complication in the manufacturing process is obviously undesirable.

The present process is therefore directed to the problem of providing an improved process for the making of low birefringent self supporting films. The process should be simple so as to be easy to use in large scale manufacturing environments.

In accordance with the present invention there is provided an improved process for making a low birefringent, self-supporting polymer film, the method comprising the steps of:

(1) providing a solution of the polymer;

(2) casting the solution on a support;

(3) drying said polymer and removing the resultant self-supporting film from the support; the improvement wherein said support has a low surface energy surface.

In preferred embodiments, the surface energy of said support onto which the polymer solution is cast is less than about 35 dynes/cm.

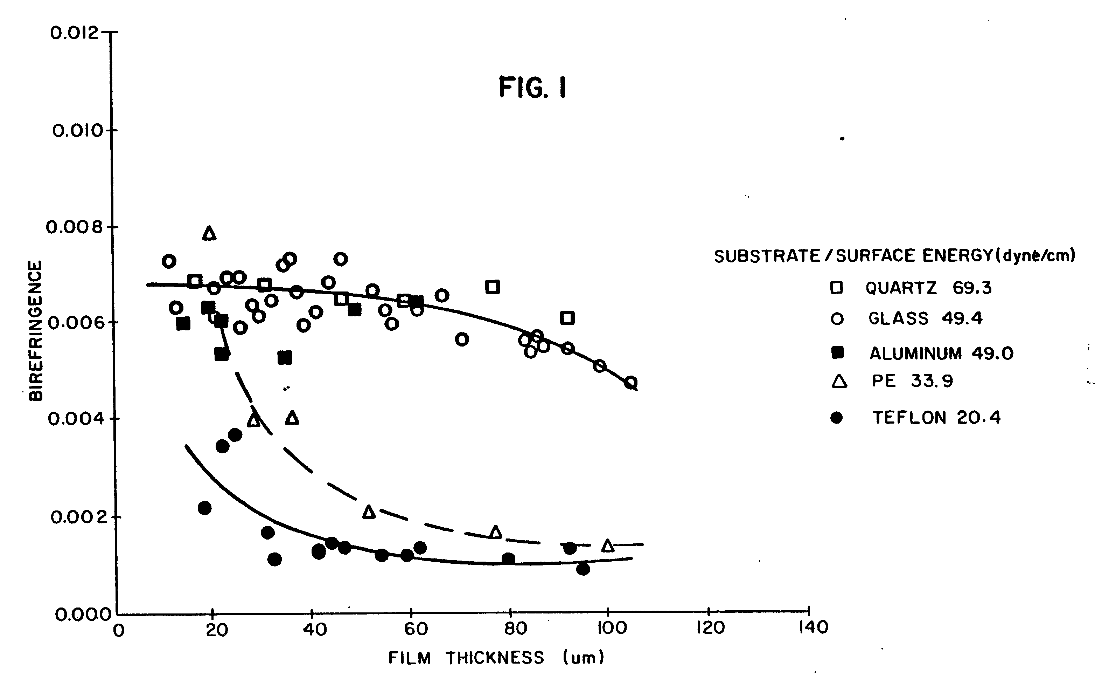

Figure 1 is a plot of the transverse birefringence vs thickness for a bisphenol A polycarbonate that was cast on several surfaces.

In accordance with the present invention, the birefringence of a self-supporting polymer film is substantially reduced if the film is cast on a surface that has low surface energy. In prior art casting processes, the surface onto which the polymer solution is cast has a high surface energy. Typical materials known in the art include metals, e.g. aluminum which has a surface energy of about 50 dynes/cm and glass which has a surface energy of about 70 dynes/cm.

The surfaces used in the present invention have a low surface energy, preferably below about 35 dynes/cm. The surface energy is measured according to the method described in detail below. Useful materials for the surface onto which the polymer solution is cast include those listed in Table I as follows:

2

TABLE I

| Polymer | Surface Energy (dyne/cm) | |
|---|---|---|
| | measured | literature 1 |
| polyethylene | 33.9 | 31 |
| poly(tetrafluoroethylene) | 20.4 | 18.5 |
| poly(hexafluoropropylene) | | 16.2 |
| poly(trifluoroethylene) | | 22 |
| poly(vinylidene fluoride) | | 25 |
| poly(trifluorochloroethylene) | | 31 |
| polystyrene | | 33 |

[1] "Adhesion and Cohesion", Philip Weiss ed., p. 190, Elsevier Publishing Company, Amsterdam, 1962.

In contrast, the aluminum that was used in the comparative examples below had a surface energy of 49.0 dynes/cm; the glass 49.4 dynes/cm; and the quartz 69.3.

The surface energy of a solid surface was determined using the Girifalco-Good-Fowkes equation. This equation requires the measurement of contact angles between the solid surface and a drop of liquid and the surface tension, dispersive force and polar force of the liquid. The measurements were made using distilled water (a polar liquid) and methylene iodide (a nonpolar liquid). The surface tension, dispersive and polar forces for the two liquids are listed in Table II below.

TABLE II

| | Surface Tension (dyne/cm) | Dispersive Force (dyne/cm) | Polar Force (dyne/cm) |
|---|---|---|---|
| Water | 72.8 | 21.8 | 51 |
| Methylene Iodide | 50.8 | 48.5 | 2.3 |

The contact angle measurements were performed on clean surfaces at room temperature, 20° C, using a Rame-Hart Goniometer with a white light source. The surfaces were cleaned by repeated rinses with acetone, isopropanol and distilled water. A drop of distilled water or methylene iodide was placed on the clean surface and the contact angle was measured on each side of the drop, for two to three drops for each liquid.

The polymers that can be cast according to the invention are conventional. Any polymer that can be dissolved in a solvent and cast to form a self-supporting film can be used. Useful polymers and their solvents are disclosed, for example, in The Polymer Handbook, 2nd. edition, section IV page 241 et seq., J. Brandrup & E. H. Immergut, Editors, John Wiley & Sons, Inc., New York, New York, 1975.

Currently preferred polymers include bisphenol A polycarbonates such as Merlon M50F available from Mobay Chemical Co. and tetramethyl bisphenol-A polycarbonate available from General Electric; and polystyrene such as Styron 685D available from Dow Chemical.

The solvent that is used to form the solution of the polymer should be selected so as to not dissolve the material that comprises the surface of the support onto which the solution is cast. One of skill in the art can easily select compatible solvents once the desired polymer and the surface of the support are selected.

The thickness of the coating is not critical. Lower birefringence is noted with thicker films. This is shown in Figure 1.

The birefringence that is plotted in Figure 1 is the transverse birefringence. The transverse birefringence is the difference between the index of refraction in a direction parallel to the plane of the film and the average of the indices of refraction in two directions perpendicular to the plane of the film.

The method of drying is also not critical. The solvent from the polymer solution is removed from the film after coating. The polymer film can be further dried such as by heating as is known in the art.

The following examples are presented for a further understanding of the invention.

The polymers used in the following examples, their molecular weights and glass transition temperatures are listed in Table III. The various casting substrates and their surface energies are given in Table IV.

Example 1:

The polymer bisphenol A polycarbonate was dissolved in 15 (wt:wt)% solutions of dichloromethane and cast onto quartz, glass, aluminum, polyethylene and poly(tetrafluoroethylene) substrates using different height coating blades to achieve different film thicknesses. The films were dried overnight at ambient conditions and then at 120°C under vacuum for 5 hours to remove residual solvent. The films were then removed from the substrates by rinsing with water. All but the films cast on poly(tetrafluoroethylene) adhered to the substrate and had to be peeled off. The results are shown in Figure 1. The films cast on the poly(tetrafluoroethylene) substrates have the lowest birefringence. The films cast on polyethylene had higher but still relatively low birefringence. The other three substrates produced about the same level of birefringence. The low surface energy of poly(tetrafluoroethylene) and polyethylene appears to impede the adhesion of the polymer to the poly(tetrafluoroethylene) surface thus reducing the molecular concentration of the polymer and lowering the level of birefringence in the film by a factor of five.

Example 2:

The polymer tetramethyl bisphenol A polycarbonate was cast onto glass and poly(tetrafluoroethylene) substrates using the method described in Example 1 and dried under identical conditions. The birefringence was lowered by a factor of 6 when tetramethyl bisphenol A polycarbonate is cast on a poly-(tetrafluoroethylene) substrate as compared to glass.

Example 3:

The polymer polystyrene was cast onto glass, polyethylene and poly(tetrafluoroethylene) substrates using the method described in Example 1 except the drying conditions were 3 days at 70°C under vacuum instead of 120°C for 5 hours. The absolute birefringence in the films cast on poly(tetrafluoroethylene) is lowered by a factor of 4 from the films cast on a glass substrate.

TABLE III

| Polymer | Source | Name | Trade | | |
|---|---|---|---|---|---|
| | | | Mn | Mw | Tg (°C) |
| Bisphenol-A Polycarbonate | Mobay | Merlon M50F | 28900 | 65300 | 154 |
| Tetramethyl Bisphenol-A Polycarbonate | General Electric | | 24400 | 64600 | 198 |
| Polystyrene | Dow Chemical | Styron 685D | 124200 | 312300 | . 106 |
| Mn = Number average molecular weight (polystyrene equivalents) | | | | | |
| Mw = Weight average molecular weight (polystyrene equivalents) | | | | | |
| Tg = Glass transition temperature, a 10°C/min. scan | | | | | |

4

TABLE IV

| Substrate | Surface Energy (dyne/cm) |
|---|---|
| Quartz | 69.3 |
| Glass | 49.4 |
| Aluminum | 49.0 |
| Polyethylene | 33.9 |
| poly(tetrafluoroethylene) | 20.4 |

**Claims**

1. An improved process for making a low birefringent, self-supporting polymer film, the method comprising the steps of:

(1) providing a solution of said polymer;

(2) casting said solution on the surface of a support;

(3) drying said polymer and removing the resultant self-supporting film from said surface;

the improvement wherein said surface has a low surface energy.

2. The process according to claim 1 wherein said surface has a surface energy of less than about 35 dynes/cm.

3. The process according to claim 1 wherein said surface comprises poly(tetrafluoroethylene).

4. A process according to any previous claim 1 wherein said polymer is a bisphenol A polycarbonate.

FIG. I

EP 0 380 028 A2